# EUROPÄISCHE PATENTSCHRIFT

(11) **EP 2 561 426 B1**
(45) Veröffentlichungstag und Bekanntmachung des Hinweises auf die Patenterteilung: **04.07.2018**
(21) Anmeldenummer: 11718659.3
(22) Anmeldetag: 21.04.2011
(51) Int. Cl.: G06F 3/033, B60K 37/06, G06F 3/0362, G06F 3/03

(54) **BEDIENVORRICHTUNG**
OPERATING DEVICE
DISPOSITIF DE COMMANDE

(30) Priorität: 21.04.2010 DE 102010017909
(43) Veröffentlichungstag der Anmeldung: 27.02.2013
(73) Patentinhaber: Marquardt GmbH, 78604 Rietheim-Weilheim (DE); Hasselbrinck, Ingo, 78549 Spaichingen (DE); Vogel, Stefan, 78086 Brigachtal (DE)
(72) Erfinder: HASSELBRINCK, Ingo, 78549 Spaichingen (DE); VOGEL, Stefan, 78086 Brigachtal (DE)
(74) Vertreter: Otten, Roth, Dobler & Partner mbB Patentanwälte
(86) Internationale Anmeldenummer: PCT/EP2011/002040
(87) Internationale Veröffentlichungsnummer: WO 2011/131364

(56) Entgegenhaltungen:
- DE-A1- 10 022 321
- US-A- 4 719 455
- US-A- 5 943 233
- US-A1- 2002 030 668
- US-A1- 2002 093 481
- US-A1- 2007 037 611
- US-A1- 2009 295 760
- US-B1- 7 072 533

## Beschreibung

Die Erfindung betrifft eine Bedienvorrichtung nach dem Oberbegriff des Patentanspruchs 1. Solche Bedienvorrichtungen werden in Kraftfahrzeugen zur Bedienung unterschiedlichster Funktionen durch einen Benutzer eingesetzt.

Eine derartige Bedienvorrichtung mit einer Sensorfläche und mit einer reflexionsoptischen Sensoreinrichtung, die wenigstens eine Leuchtdiode und wenigstens eine Fotodiode für optische Strahlung aufweist, ist an sich bekannt. Bei Annäherung eines Bedienelementes, beispielsweise eines Fingers des Benutzers, an die Sensorfläche und/oder bei Berührung der Sensorfläche mittels des Bedienelements ist mit Hilfe der Sensoreinrichtung ein Signal erzeugbar, indem die von der Leuchtdiode emittierte optische Strahlung vom Bedienelement zumindest teilweise zur Fotodiode reflektiert wird und diese reflektierte optische Strahlung entsprechend ausgewertet wird. Eine solche Bedienvorrichtung arbeitet daher in der Art eines Touchpads.

Desweiteren ist es in Kraftfahrzeugen bekannt, Bedienvorrichtungen in der Art eines Multifunktionsbedienelements zur Auslösung diverser Funktionen durch den Benutzer zu verwenden. Ein solches Multifunktionsbedienelement weist ein bewegbares Betätigungsorgan auf, das zur Betätigung von wenigstens einem elektrischen Schaltelement dient. Das betätigte Schaltelement erzeugt wiederum ein elektrisches Signal, das dann die Auslösung der gewünschten Funktion bewirkt.

Ein solches Multifunktionsbedienelement mit einer Bedienvorrichtung, die eine reflexionsoptische Sensoreinrichtung aufweist, ist aus der US 2002/0030668 A1 bekannt.

Mit optischen oder reflexionsoptischen Sensoreinrichtungen arbeitende Bedienvorrichtungen sind auch in der US 7 072 533 B1, US 2002/0093481 A1, US 4 719 455 A, US 5 943 233 A und US 2009/0295760 A1 beschrieben. In der US 2007/0037611 A1 ist ein Multifunktionsbedienelement mit einem widerstandsabhängig arbeitenden Schaltelement beschrieben. Schließlich zeigt die DE 100 22 321 A1 eine mit einer reflexionsoptischen Sensoreinrichtung arbeitende Bedienvorrichtung in einem Kraftfahrzeug.

Der Erfindung liegt die Aufgabe zugrunde, die Bedienvorrichtung derart weiterzuentwickeln, dass deren Funktionalität gesteigert ist.

Diese Aufgabe wird bei einer gattungsgemäßen Bedienvorrichtung durch die kennzeichnenden Merkmale des Anspruchs 1 gelöst.

Die erfindungsgemäße Bedienvorrichtung weist sowohl ein Touchpad als auch ein Multifunktionsbedienelement auf. Dabei ist die Sensorfläche am Betätigungsorgan angeordnet und somit das Touchpad in das Multifunktionsbedienelement integriert. Eine solche Bedienvorrichtung bietet dem Benutzer erweiterte Bedienmöglichkeiten gegenüber den herkömmlichen separaten Vorrichtungen, nämlich Touchpad und Multifunktionsbedienelement.

Um verschiedene Stellen auf der Sensorfläche anzuwählen und/oder um eine Verfolgung des Bedienelementes an der Sensorfläche zu ermöglichen, weist die reflexionsoptische Sensoreinrichtung mehrere Leuchtdioden und/oder mehrere Fotodioden auf.

Zweckmäßigerweise sind die Leuchtdioden und/oder die Fotodioden matrixförmig angeordnet. Dies erleichtert dann die Auswertung des entsprechend erzeugten Signals. In kompakter Ausführung bietet es sich dabei an, dass die Sensorfläche als eine Plakette aus einer lichtdurchlässigen ersten Kunststoffschicht und einer lichtundurchlässigen sowie Infrarot(IR)-durchlässigen zweiten Schicht ausgestaltet ist.

Insgesamt wird somit die Funktionalität bei der erfindungsgemäßen Bedienvorrichtung in hohem Maße gesteigert. Weitere Ausgestaltungen der Erfindung sind Gegenstand der Unteransprüche.

Bei einer weiteren Ausgestaltung der als ein Multifunktionsbedienelement mit einem Betätigungsorgan ausgebildeten Bedienvorrichtung ist die Sensorfläche derart am Betätigungsorgan angeordnet, dass ein Richtungssignal in der Art einer Windrose durch entsprechende Bedienung erzeugbar ist. Das bisherige Verschwenken des Betätigungsorgans in verschiedene Richtungen wird in diesem Fall durch Annäherung und/oder Berühren der entsprechenden Stellen an der Sensorfläche ersetzt. Um gegebenenfalls noch zusätzliche Bedienfunktionen zu realisieren, kann das Betätigungsorgan durch eine Dreh- und/oder Drück-Funktion betätigbar sein. Auch diese Funktionen können mit Hilfe der Sensorfläche realisiert sein. Es bietet sich hier der Einfachheit sowie der Ergonomie halber für den Benutzer jedoch an, das Betätigungsorgan durch Drehen und/oder Drücken für die zusätzlichen Bedienfunktionen zu bewegen. Dabei kann das Betätigungsorgan für die zusätzliche Bedienfunktion auf ein elektrisches Schaltelement zur Erzeugung eines entsprechenden elektrischen Signals einwirken.

In zweckmäßiger sowie kompakter Ausgestaltung weist das Multifunktionsbedienelement ein Gehäuse auf. Das Betätigungsorgan ist im Gehäuse bewegbar gelagert und ragt zur Bedienung durch den Benutzer aus dem Gehäuse heraus. Zusätzlich können noch weitere Betätigungselemente am Gehäuse befindlich sein, die auf elektrische Schalter einwirken. Dadurch lassen sich weitere Funktionen durch den Benutzer auslösen, beispielsweise kann so eine Direktanwahl eines bestimmten Menüs auf einem Bildschirm im Kraftfahrzeug erfolgen.

Es bietet sich an, dass die Leuchtdiode und/oder die Fotodiode auf einer Leiterplatte befindlich sind, was die Montage der Bedienvorrichtung erleichtert. Selbstverständlich können auf der Leiterplatte noch weitere elektrische und/oder elektronische Bauteile aufgenommen sein. Beispielsweise kann auch ein Mikroprozessor zur Auswertung der Signale auf der Leiterplatte angeordnet sein. In kompakter Bauweise kann die Leiterplatte im Betätigungsorgan angeordnet sein.

Bei der erfindungsgemäßen Bedienvorrichtung besitzt die optische Strahlung eine Wellenlänge, die nicht im Bereich des für das menschliche Auge sichtbaren Lichtes liegt. Insbesondere handelt es sich bei der optischen Strahlung um Infrarot-Strahlung. In diesem Fall weist die reflexionsoptische Sensoreinrichtung wenigstens eine Infrarot(IR)-Leuchtdiode und/oder wenigstens eine Infrarot(IR)-Fotodiode auf. Die Sensorfläche ist für die optische Strahlung im wesentlichen transparent sowie für sichtbares Licht im wesentlichen nichttransparent. Für das Auge des Benutzers ist somit die Sensorfläche undurchsichtig, womit die Sensoreinrichtung für den Benutzer verdeckt ist. Geschaffen ist somit ein Touchpad im KFZ als Bedienelement, beispielsweise für eine zentrale Bedieneinheit, auf Basis von optischer Lichtabtastung, und zwar mittels Infrarot-Technologie.

Zweckmäßigerweise kann die Sensorfläche für sichtbares Licht durchlässige Bereiche aufweisen. Diese Bereiche können beleuchtbar sein, und somit zur Darstellung von Symbolen, Funktionsanzeigen o. dgl. dienen, wobei jedoch vorteilhafterweise die restliche Fläche des Touchpads undurchsichtig ist. Der einfachen und kostengünstigen Herstellbarkeit halber kann die Plakette als ein Zwei-Komponenten(2K)-Teil hergestellt werden.

Für eine besonders bevorzugte Ausgestaltung ist nachfolgendes festzustellen. Im Gegensatz zu einem kapazitiven Sensor ist es mit einem auf Infrarot (IR) basierten Sensor möglich, eine Annäherung an ein Bedienfeld zu detektieren, um auf einer Ebene über dem Bedienfeld Aktionen auszulösen. Auf der Berührungsebene lassen sich weitere/andere Funktionen realisieren. Durch die Anordnung mehrerer IR-Dioden und/oder IR-Sensoren als Matrix auch unter einem Display lässt sich die Position eines Fingers, eines Stiftes und/oder einer Hand im Raum erkennen. Ebenso kann eine Bewegung und/oder die Bewegungsgeschwindigkeit und/oder eine Richtung erkannt werden. Hieraus lassen sich dann entsprechende Aktionen ableiten. Eine Kombination aus kapazitivem Sensor auf Berührungsebene und IR-Sensoren auf Annäherungsebene ist ebenfalls möglich.

Die mit der Erfindung erzielten Vorteile bestehen insbesondere darin, dass ein Touchpad zur Bedienung einzelner Funktionen im KFZ bis hin zur Schrifterkennung mittels des Fingers oder ähnlichen Gegenständen geschaffen ist. Das Touchpad erkennt im Gegensatz zu heutigen Anwendungen bereits die Annäherung und kann somit in verschiedenen Ebenen bedient werden. Diese optischen Bedieneinheiten können mit einfachen elektronischen Bauteilen Bewegungen erkennen. Dabei können 3D-Bewegungen anhand des empfangenen Signals ausgewertet werden, so dass verschiedenste Eingabemöglichkeiten mittels der Bedieneinheiten denkbar sind. Vorteilhafterweise gelingt somit die Realisierung eines Touchpads speziell im KFZ mit Annäherungsfunktion, Multitouch, Schrifterkennung o. dgl., wobei das Touchpad die Möglichkeit der Bedienung in verschiedenen Ebenen bietet. Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: eine Prinzipskizze zur Funktionsweise der Bedienvorrichtung,
- Fig. 2: eine Prinzipskizze für die Bedienvorrichtung in weiterer Ausgestaltung,
- Fig. 3: eine als ein Multifunktionsbedienelement ausgestaltete Bedienvorrichtung in perspektivischer Ansicht,
- Fig. 4: die Bedienvorrichtung aus Fig. 3 in Explosionsdarstellung,
- Fig. 5: eine Schnittdarstellung durch das Betätigungsorgan sowie durch einen Teil des Gehäuses aus Fig. 3,
- Fig. 6: eine Draufsicht auf das Multifunktionsbedienelement aus Fig. 3, wobei die Sensorfläche am Betätigungsorgan durchsichtig dargestellt ist, und
- Fig. 7: die Sensoreinrichtung im Betätigungsorgan aus Fig. 3.

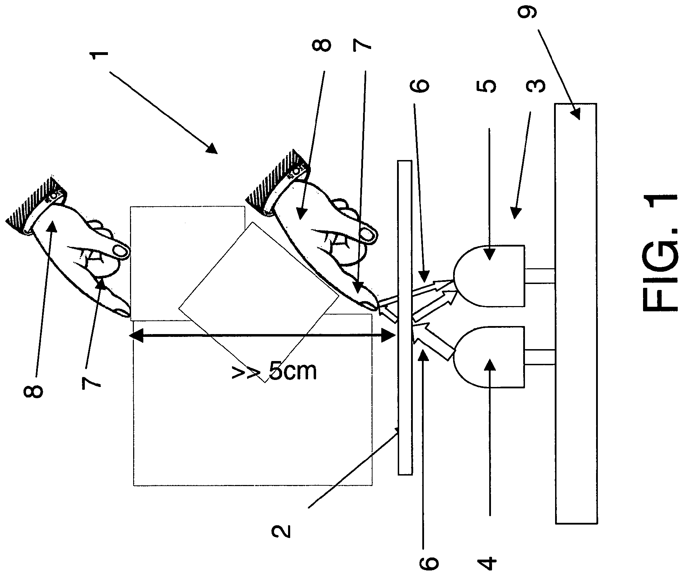

In Fig. 1 ist als Prinzipskizze eine Bedienvorrichtung 1, insbesondere für ein Kraftfahrzeug, mit einer Sensorfläche 2 und mit einer reflexionsoptischen Sensoreinrichtung 3 gezeigt. Die Sensoreinrichtung 3 weist wenigstens eine Leuchtdiode 4 und wenigstens eine Fotodiode 5 für optische Strahlung 6 auf. Bei Annäherung an die Sensorfläche 2 und/oder Berührung der Sensorfläche 2 mittels eines Bedienelements, hier beispielsweise ein Finger 7 der Hand 8 eines Benutzers, ist ein Signal mittels einer Elektronik 9 erzeugbar. Dabei wird über die Sendediode 4 sowie die Empfangsdiode 5 eine Reflexion der optischen Strahlung 6 durch den Finger 7 bzw. durch die Hand 8, insbesondere deren Bewegung, erkannt.

Die Bedienvorrichtung 1 gestattet damit eine Annäherungserkennung im Hinblick auf die Geschwindigkeit und/oder die Richtung des Fingers 7. Desweiteren ist ein Erkennen des Überwischens mittels des Fingers 7 von links nach rechts bzw. von oben nach unten oder umgekehrt ermöglicht. Schließlich ist auch eine "Multipoint"-Erkennung zum Drehen mittels zweier Finger 7 ermöglicht. Die Erkennung ist sowohl in der Nähe der Sensorfläche 2 als auch in der Art eines Fernfeldes, beispielsweise in mehr als 5 cm Entfernung von der Sensorfläche 2 möglich.

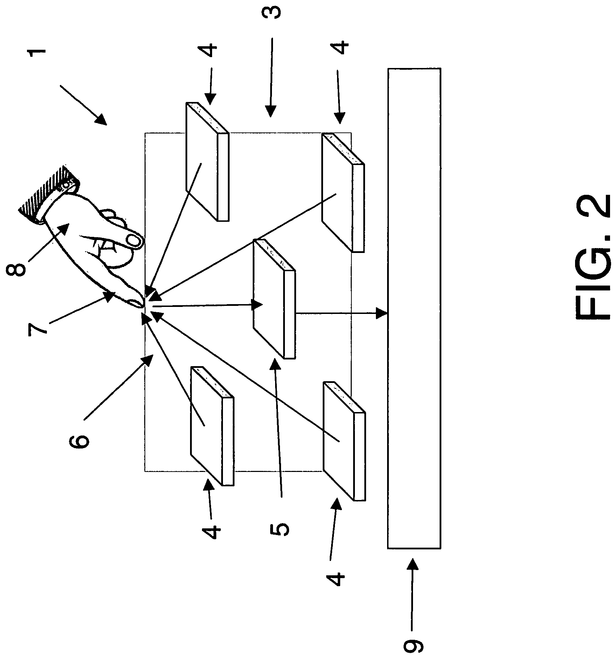

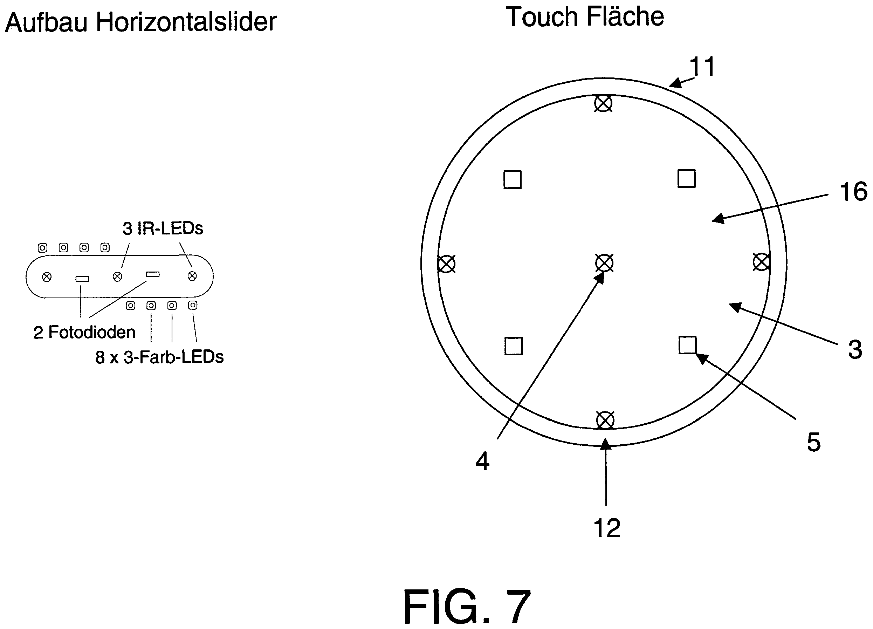

Um komplexe Bewegungen des Fingers 7 und/oder der Hand 8 zu detektieren, können gemäß Fig. 2 mehrere Sendedioden 4 und/oder Empfangsdioden 5 angeordnet werden. Dabei sind mehrere Sendedioden 4 in Fig. 2 matrixförmig angeordnet, wobei lediglich eine Empfangsdiode 5 mit diesen Sendedioden 4 zusammenwirkt. Selbstverständlich können bei Bedarf auch mehrere Empfangsdioden 5 in entsprechender Weise vorgesehen sein, was in Fig. 7 näher dargestellt ist.

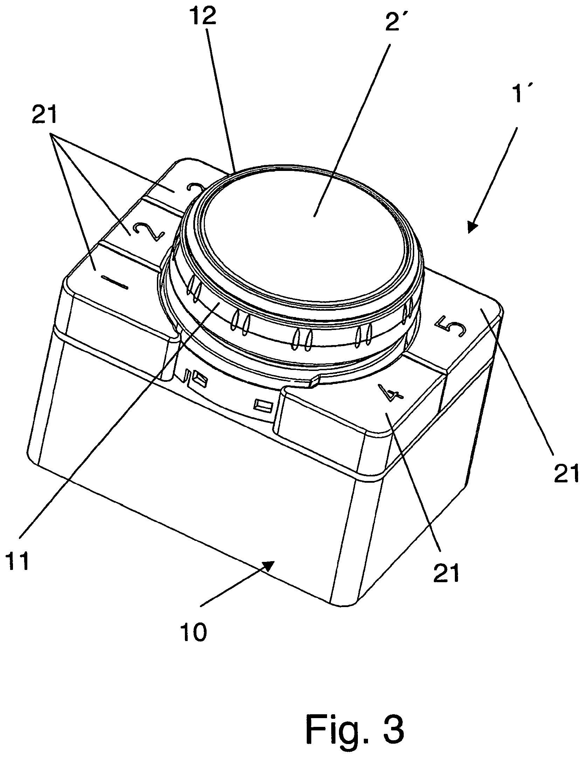

In Fig. 3 ist eine als Multifunktionsbedienelement 1' ausgestaltete Bedienvorrichtung gezeigt. Das Multifunktionsbedienelement 1' besitzt ein Gehäuse 10, aus dem ein Betätigungsorgan 11 zur Bedienung durch den Benutzer herausragt. Das Betätigungsorgan 11 ist im Gehäuse 10 bewegbar gelagert. Und zwar ist das Betätigungsorgan 11 drehbar sowie drückbar, um entsprechende Schaltsignale, nämlich ein Dreh- sowie ein Enter-Signal, zu erzeugen. An der Oberseite des Betätigungsorgans 11 ist eine Plakette 2' als Sensorfläche angeordnet. Im Inneren des Betätigungsorgans 11 befindet sich die in Fig. 7 sichtbare Sensoreinrichtung 3. Dadurch ist bei Annäherung des Fingers 7 an die Plakette 2' und/oder Berührung der Plakette 2' mittels des Fingers 7, wie bereits oben beschrieben, ein entsprechendes Signal erzeugbar.

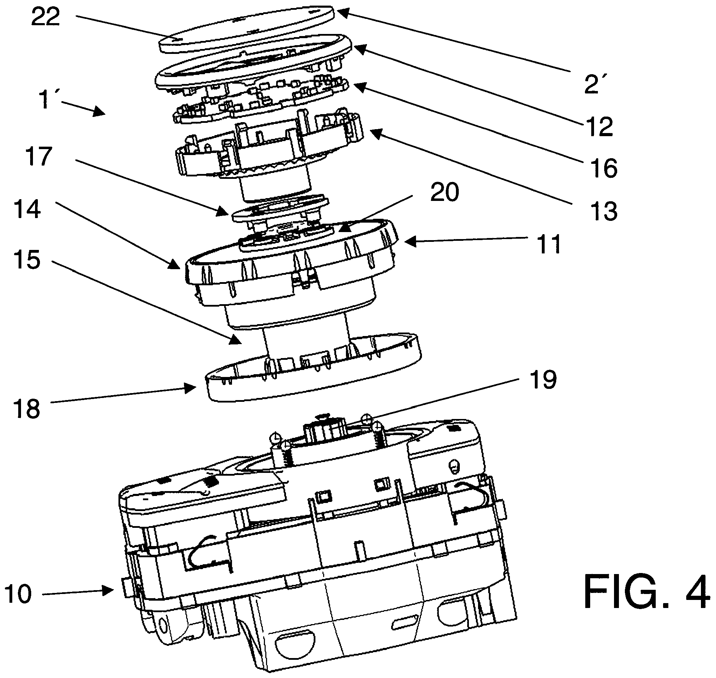

Durch entsprechende Bedienung durch den Benutzer an der Plakette 2' ist vorliegend ein Richtungssignal in der Art einer Windrose erzeugbar. Zur Kennzeichnung der jeweiligen Bedienungsstellen an der Plakette 2' für die Richtungssignale sind dort gemäß Fig. 4 entsprechende Richtungspfeile 22 angebracht. Mittels Drehen und/oder Drücken durch den Benutzer ist, wie bereits erwähnt, das Betätigungsorgan 11 für zusätzliche Bedienfunktionen bewegbar. Für die Betätigung dieser zusätzlichen Bedienfunktionen wirkt das Betätigungsorgan 11 auf elektrische Schaltelemente, wie nachfolgend beschrieben, zur Erzeugung eines entsprechenden elektrischen Signals ein.

In Fig. 4 ist der nähere Aufbau des Multifunktionsbedienelements 1' zu sehen. Das Betätigungsorgan 11 umfasst einen Lichtleiter 12 zu dessen Beleuchtung in der Art einer Korona. Desweiteren weist das Betätigungsorgan 11 ein Führungsteil 13, einen Chromring 14 für die Drehbewegung, einen Schaft 15 mit einer Weichkomponente zur Geräuschdämpfung für die Bewegung des Betätigungsorgans 11 sowie eine Führungsscheibe 18 auf. Im Gehäuse 10 befindet sich eine Verdrehsicherung 19 für die Aufnahme des Betätigungsorgans 11. Eine Schaltmatte 17 wirkt mit einer im Gehäuse 10 befindlichen Scheibe 20, die als Gegenpol zur Schaltmatte 17 dient, für die Erzeugung des Enter-Signals durch Drücken des Betätigungsorgans 11 zusammen. Neben der als elektrisches Schaltelement dienenden Schaltmatte 17 befinden sich im Gehäuse 10 noch weitere, nicht näher gezeigte elektrische Schaltelemente, die zur Erzeugung der elektrischen Schaltsignale bei der Drehbewegung des Chromrings 14 am Betätigungsorgan 11 dienen. Selbstverständlich können anstelle von elektrischen Schaltelementen auch optische, elektrooptische o. dgl. Schaltelemente zur Erzeugung der Schaltsignale verwendet werden.

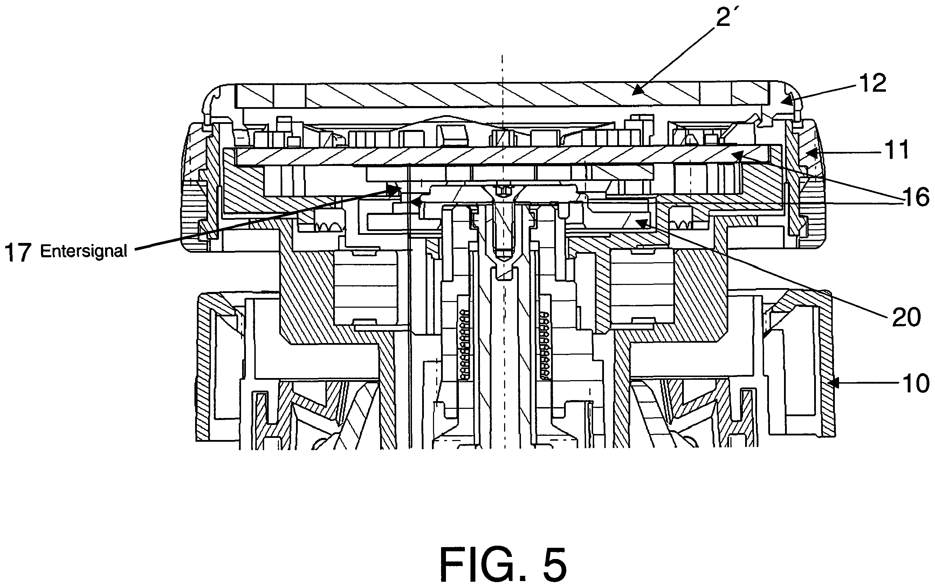

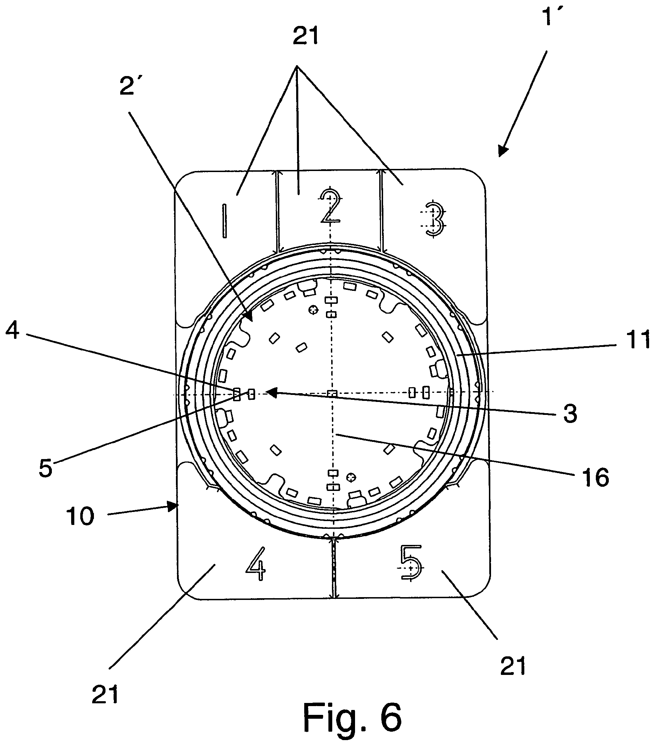

Einen Schnitt durch das Betätigungsorgan 11 sowie durch das Oberteil des Gehäuses 10 ist in der Fig. 5 zu sehen. Hieraus geht die Lagerung des drehbaren Betätigungsorgans 11 näher hervor. Desweiteren ist auch die Signalerzeugung für das Enter-Signal näher zu sehen. Schließlich befindet sich gemäß Fig. 4 oder Fig. 5 eine flexible Leiterplatte 16 im Betätigungsorgan 11. Die Leiterplatte 16 dient unter anderem der Aufnahme der Leuchtdioden 4 sowie der Fotodioden 5, wie anhand der Fig. 6 zu erkennen ist.

Wie man weiter der Fig. 3 entnimmt, weist das Multifunktionsbedienelement 1' weitere im Gehäuse 10 befindliche Betätigungselemente 21 für elektrische Schalter zur Anwahl diverser weiterer Funktionen auf. Beispielsweise ist mit Hilfe des Betätigungselements 21 die Darstellung des Menüs für das Navigationssystem auf einem Bildschirm im Kraftfahrzeug anwählbar. Die Betätigungselemente 21 wirken wiederum auf im Gehäuse 10 befindliche elektrische Schalter zur Erzeugung der entsprechenden Schaltsignale ein.

In Fig. 7 ist die matrixförmige Anordnung der Sendedioden 4 sowie Empfangsdioden 5 für die Sensoreinrichtung 3 im Betätigungsorgan 11 zur Erkennung der Betätigungsrichtung durch den Benutzer näher gezeigt. Schließlich ist mit einer derartigen Anordnung, wie in der links befindlichen Prinzipskizze von Fig. 7 zu erkennen ist, auch die Realisierung eines "Horizontal-Sliders" als Bedienelement möglich.

Es bietet sich an, dass die optische Strahlung 6 eine Wellenlänge besitzt, die nicht im Bereich des für das menschliche Auge sichtbaren Lichtes liegt. Insbesondere kann es sich bei der optischen Strahlung 6 um Infrarot-Strahlung handeln, wobei dann die Sendediode 4 aus einer Infrarot(IR)-Leuchtdiode sowie die Empfangsdiode 5 aus einer Infrarot(IR)-Fotodiode besteht. Die in Fig. 1 gezeigte Sensorfläche 2 ist für die optische Strahlung 6 im wesentlichen transparent sowie für sichtbares Licht im wesentlichen nichttransparent ausgestaltet. Damit kann zwar die für die Funktionalität der Bedienvorrichtung 1 von der Sensoreinrichtung 3 ausgesandte optische Strahlung 6 die Sensorfläche 2 durchdringen sowie die beispielsweise am Finger 7 reflektierte optische Strahlung 6 wiederum von der Sensoreinrichtung 3 empfangen werden. Andererseits ist jedoch die Sensorfläche 2 für das menschliche Auge undurchsichtig, womit das Betätigungsorgan 11 vollständig entsprechend den Designvorgaben für die Bedienvorrichtung 1 gestaltet werden kann.

Insbesondere bietet es sich an, dass die Sensorfläche 2 aus einer lichtdurchlässigen ersten Kunststoffschicht und einer lichtundurchlässigen, jedoch Infrarot(IR)-durchlässigen zweiten Schicht ausgestaltet ist. Eine solche Sensorfläche 2 lässt sich als ein ZweiKomponenten(2K)-Teil im Spritzgießverfahren herstellen. Die Plakette 2' für das Betätigungsorgan 11 kann in dieser Weise als ein Zwei-Komponenten(2K)-Teil gestaltet sein. Bei der Plakette 2' ist über einer transparenten Polycarbonat-Schicht die Infrarotdurchlässige, jedoch für das menschliche Auge undurchsichtige Schicht angeordnet. Ebenso lässt sich der Lichtleiter 12 für die Korona-Beleuchtung und die Plakette 2' als ein 2K-Teil gestalten. Soweit erforderlich, kann die Sensorfläche 2, 2' für sichtbares Licht durchlässige Bereiche zur Darstellung von Symbolen, Funktionsanzeigen o. dgl. aufweisen, was sich beispielsweise für die in Fig. 4 gezeigten Richtungspfeile 22 anbietet.

Die Erfindung ist nicht auf die beschriebenen und dargestellten Ausführungsbeispiele beschränkt. Sie umfaßt vielmehr auch alle fachmännischen Weiterbildungen im Rahmen der durch die Patentansprüche definierten Erfindung. So kann die Erfindung nicht nur für alle Bedienelemente im Kraftfahrzeug sondern auch für sonstige Geräte, beispielsweise Hausgeräte, Werkzeugmaschinen, Computersteuerungen o. dgl. Verwendung finden.

### Bezugszeichen-Liste:

- 1:: Bedienvorrichtung
- 1':: Multifunktionsbedienelement
- 2:: Sensorfläche
- 2':: Plakette
- 3:: Sensoreinrichtung
- 4:: Leuchtdiode / Sendediode
- 5:: Fotodiode / Empfangsdiode
- 6:: optische Strahlung
- 7:: Finger
- 8:: Hand
- 9:: Elektronik
- 10:: Gehäuse
- 11:: Betätigungsorgan
- 12:: Lichtleiter
- 13:: Führungsteil
- 14:: Chromring
- 15:: Schaft
- 16:: Leiterplatte
- 17:: Schaltmatte / Schaltelement
- 18:: Führungscheibe
- 19:: Verdrehsicherung
- 20:: Scheibe
- 21:: Betätigungselement
- 22:: Richtungspfeil (an Plakette)

## Patentansprüche

1. Bedienvorrichtung mit einem bewegbaren Betätigungsorgan (11) zur Betätigung von wenigstens einem Schaltelement (17) für die Erzeugung eines Schaltsignals, mit einer am Betätigungsorgan (11) angeordneten Sensorfläche (2') und mit einer reflexionsoptischen Sensoreinrichtung (3), die wenigstens eine Leuchtdiode (4) und wenigstens eine Fotodiode (5) für optische Strahlung (6) aufweist, wobei es sich bei der optische Strahlung (6) um Infrarot-Strahlung handelt und wobei die reflexionsoptische Sensoreinrichtung (3) wenigstens eine Infrarot(IR)-Leuchtdiode (4) und/oder wenigstens eine Infrarot(IR)-Fotodiode (5) aufweist, derart dass bei Annäherung an die Sensorfläche (2') und/oder Berührung der Sensorfläche (2') ein Signal erzeugbar ist, wobei die reflexionsoptische Sensoreinrichtung (3) mehrere Leuchtdioden (4) und/oder mehrere Fotodioden (5) aufweist, und wobei die Leuchtdioden (4) und/oder die Fotodioden (5) matrixförmig angeordnet sind, **dadurch gekennzeichnet, dass** die Sensorfläche (2') als Plakette aus einer lichtdurchlässigen ersten Kunststoffschicht und einer lichtundurchlässigen sowie Infrarot(IR)-durchlässigen zweiten Schicht ausgestaltet ist.

2. Bedienvorrichtung nach Anspruch 1, **dadurch gekennzeichnet, dass** die Sensorfläche (2') derart am Betätigungsorgan (11) angeordnet ist, dass ein Richtungssignal in der Art einer Windrose durch entsprechende Bedienung der Sensorfläche (2') am Betätigungsorgan (11) erzeugbar ist, und dass vorzugsweise das Betätigungsorgan (11) durch Drehen und/oder Drücken für zusätzliche Bedienfunktionen bewegbar ist, wobei insbesondere das Betätigungsorgan (11) für die zusätzliche Bedienfunktion auf das Schaltelement (17) zur Erzeugung des Schaltsignals einwirkt.

3. Bedienvorrichtung nach Anspruch 1 oder 2, **dadurch gekennzeichnet, dass** ein Gehäuse (10) vorgesehen ist, dass vorzugsweise das Betätigungsorgan (11) im Gehäuse (10) bewegbar gelagert ist, dass weiter vorzugsweise das Betätigungsorgan (11) zur Bedienung durch den Benutzer aus dem Gehäuse (10) herausragt, und dass noch weiter vorzugsweise Betätigungselemente (21) am Gehäuse (10) für elektrische Schalter befindlich sind.

4. Bedienvorrichtung nach Anspruch 1, 2 oder 3, **dadurch gekennzeichnet, dass** die Leuchtdiode (4) und/oder die Fotodiode (5) auf einer Leiterplatte (16) befindlich sind, und dass vorzugsweise die Leiterplatte (16) im Betätigungsorgan (11) angeordnet ist.

5. Bedienvorrichtung nach einem der Ansprüche 1 bis 4, **dadurch gekennzeichnet, dass** die Sensorfläche (2') für sichtbares Licht durchlässige Bereiche zur Darstellung von Symbolen, Funktionsanzeigen o. dgl. aufweist.

6. Bedienvorrichtung nach einem der Ansprüche 1 bis 5, **dadurch gekennzeichnet, dass** die Plakette (2') als ein Zwei-Komponenten(2K)-Teil hergestellt ist.

7. Bedienvorrichtung nach einem der Ansprüche 1 bis 6, **dadurch gekennzeichnet, dass** die Annäherung an die Sensorfläche (2') und/oder Berührung der Sensorfläche (2') mittels eines Fingers (7) eines Benutzers erfolgt.

8. Multifunktionsbedienelement (1') für ein Kraftfahrzeug mit einer Bedienvorrichtung (1) nach einem der Ansprüche 1 bis 7.

## Claims

1. Operating device with a movable actuating member (11) for actuating at least one switch element (17) for generating a switch signal, with a sensor surface (2') being arranged on the actuating member (11) and with an optical reflection sensor device (3), which has at least one illuminating diode (4) and at least one photodiode (5) for optical radiation (6), wherein the optical radiation (6) is infrared radiation and wherein the optical reflection sensor device (3) has at least one infrared (IR) illuminating diode (4) and/or at least one infrared (IR) photodiode (5), such that upon approaching the sensor surface (2') and/or upon contact with the sensor surface (2') a signal can be produced, wherein the optical reflection sensor device (3) has a number of illuminating diodes (4) and/or a number of photodiodes (5), and wherein the illuminating diodes (4) and/or the photodiodes (5) are arranged in a matrix, **characterised in that** the sensor surface (2') is designed as a placard made of a light-permeable first plastic layer and an opaque and infrared(IR)-permeable second layer.

2. Operating device according to claim 1, **characterised in that** the sensor surface (2') is arranged on the actuating member (11) such that a direction signal can be produced in the form of a compass rose by means of operating the sensor surface (2') on the actuating member (11), and such that the actuating member (11) is preferably movable by turning and/or pressing for additional control functions, wherein the actuating member (11) for the additional control function has a particular effect on the switch element (17) for generating the switch signal.

3. Operating device according to claim 1 or 2, **characterised in that** a housing (10) is provided, that the actuating member (11) is mounted preferably movably in the housing (10), that the actuating member (11) further preferably protrudes from the housing (10) for operating by the user and that further preferably still actuating elements (21) for electrical switches can be found on the housing (10).

4. Operating device according to claim 1, 2 or 3, **characterised in that** the illuminating diode (4) and/or the photodiode (5) are located on a circuit board (16), and that the circuit board (16) is preferably arranged in the actuating member (11).

5. Operating device according to one of claims 1 to 4, **characterised in that** the sensor surface (2') has permeable areas for visible light to display symbols, function displays and similar.

6. Operating device according to one of claims 1 to 5, **characterised in that** the placard (2') is produced as a two-component (2C) part.

7. Operating device according to one of claims 1 to 6, **characterised in that** the sensor surface (2') is approached and/or contact is made with the sensor surface (2') by a finger (7) of a user.

8. Multi-functional operating device (1') for a vehicle with an operating device (1) according to one of claims 1 to 7.

## Revendications

1. Dispositif de commande comprenant un organe d'actionnement mobile (11) destiné à actionner au moins un élément de commutation (17) pour la production d'un signal de commutation, comprenant une surface (2') de détection disposée sur l'organe d'actionnement (11) et comprenant un dispositif de détection (3) optique à réflexion, qui comporte au moins une diode électroluminescente (4) et au moins une photodiode (5) pour le rayonnement optique (6), le rayonnement optique (6) étant notamment un rayonnement infrarouge et le dispositif de détection (3) optique à réflexion comportant au moins une diode électroluminescente (4) infrarouge (IR) et/ou au moins une photodiode (5) infrarouge (IR), de manière à ce que se produise un signal lors de l'approche de la surface de détection (2') et/ou du contact avec la surface de détection (2') ; le dispositif de détection (3) optique à réflexion comportant plusieurs diodes électroluminescentes (4) et/ou plusieurs photodiodes (5), et les diodes électroluminescentes (4) et/ou les photodiodes (5) étant disposées sous forme de matrice, **caractérisé en ce que** la surface de détection (2') est conçue sous la forme de plaquette constituée d'une première couche synthétique transparente et d'une seconde couche perméable à l'infrarouge (IR) et opaque.

2. Dispositif de commande selon la revendication 1, **caractérisé en ce que** la surface de détection (2') est disposée sur l'organe de commande (11) de manière à ce qu'un signal de direction du type rose des vents puisse être produit par la commande correspondante de la surface de détection (2') sur l'organe d'actionnement (11), et **en ce que** de préférence l'organe d'actionnement (11) puisse être mobile par rotation et/ou par pression pour les fonctions de commande supplémentaires, en particulier l'organe d'actionnement (11) agissant sur l'élément de commutation (17) pour la fonction de commande supplémentaire afin de produire le signal de commutation.

3. Dispositif de commande selon la revendication 1 ou 2, **caractérisé en ce que** le dispositif comprend un boîtier (10), **en ce que** de préférence l'organe d'actionnement (11) est monté mobile dans le boîtier (10), **en ce que** de préférence encore l'organe d'actionnement (11) fait saillie du boîtier (10) pour être commandé par l'utilisateur, et **en ce que** de préférence encore les éléments d'actionnement (21) se trouvent sur le boîtier (10) pour l'interrupteur électrique.

4. Dispositif de commande selon la revendication 1, 2 ou 3, **caractérisé en ce que** la diode électroluminescente (4) et/ou la photodiode (5) se trouve sur une carte de circuits imprimés (16) et **en ce que** de préférence la carte de circuits imprimés (16) est disposée sur l'organe d'actionnement (11).

5. Dispositif de commande selon l'une des revendications 1 à 4, **caractérisé en ce que** la surface de détection (2') comporte pour la lumière visible des zones transparentes destinées à la représentation de symboles, l'affichage de fonction ou similaire.

6. Dispositif de commande selon l'une des revendications 1 à 5, **caractérisé en ce que** la plaquette (2') est fabriquée sous la forme d'une partie à deux composants (2C).

7. Dispositif de commande selon l'une des revendications 1 à 6, **caractérisé en ce que** l'approche de la surface de détection (2') et/ou le contact avec la surface de détection (2') s'effectue au moyen d'un doigt de l'utilisateur (7).

8. Élément de commande multifonction (1') pour un véhicule automobile comprenant un dispositif de commande (1) selon l'une des revendications 1 à 7.
